Europäisches Patentamt

European Patent Office

Office européen des brevets

(11) Publication number: **0 013 179**

A1

(12) **EUROPEAN PATENT APPLICATION**

(21) Application number: 79303061.0

(22) Date of filing: 28.12.79

(51) Int. Cl.³: **G 02 F 1/01**
**G 02 B 7/18**

(30) Priority: 28.12.78 JP 161251/78

(43) Date of publication of application:
09.07.80 Bulletin 80/14

(84) Designated Contracting States:
BE DE FR GB LU NL

(71) Applicant: KUREHA KAGAKU KOGYO KABUSHIKI KAISHA
8 Horidome-cho, 1-chome Nihonbashi
Chuo-ku Tokyo(JP)

(72) Inventor: Hamada, Akira
78-65 Hananoi Nishiki-machi
Iwaki-shi Fukushima-ken(JP)

(72) Inventor: Murayama, Naohiro
16-1 Maehara Nishiki-machi
Iwaki-shi Fukushima-ken(JP)

(74) Representative: Myerscough, Philip Boyd et al,
J.A.Kemp & Co. 14, South Square Gray's Inn
London, WC1R 5EU(GB)

(54) **Light processing apparatus.**

(57) Light processing apparatus (20) comprises a piezoelectric high polymeric film (1) supported under tension at least at two opposite ends (2, 3) thereof, at least one pair (8 or 9) of electrodes arranged to produce an electric field (E) across the thickness of the polymeric film and optical means (19) connected to the polymeric film such that said optical means can be displaced upon piezoelectric response of the film to a voltage applied across the electrode. The optical means may be a mirror or a lens fixed to the polymeric film. The apparatus can be used to control accurately, for example, the angle through which a light beam is reflected.

FIG. 1

EP 0 013 179 A1

- 1 -

DESCRIPTION

TITLE:   LIGHT PROCESSING APPARATUS

The present invention relates to a light processing apparatus using a piezoelectric polymeric film. More particularly, it relates to an apparatus for processing a light beam by changing the spatial position or arrangement of an optical means.

As a result of the expanding use of light in information processing, a variety of apparatuses have been developed  for changing the spatial position or arrangement of an optical means such as mirrors and lens. However, most of the prior art apparatuses employ elaborate mechanical systems and each apparatus is generally only useful for some specific application. A simple light processing apparatus has now been devised incorporating a piezoelectric polymeric film and which can be used in a wide variety of applications.

Accordingly, the present invention provides light processing apparatus comprising a piezoelectric high polymeric film supported under tension at least at two opposite ends thereof,    at least one pair of electrodes arranged to produce an electric field across the thickness of the polymeric film and optical means connected to the polymeric film such that said optical means can be displaced upon piezoelectric response of the film to a voltage applied across the electrodes.

The apparatus of the invention can be operated by relatively simple electric control signals and is capable of changing the direction of a light beam through a wide angle. It is possible to displace the optical means with a high degree of accuracy and accordingly the apparatus of the invention is capable of accurate optical information processing.

The light processing apparatus of the invention can take the form of at least one piezoelectric high polymeric film fixed under tension at least at two longitudinally opposed ends thereof, with two pairs of electrodes provided on the polymeric film. Optical means can be fixed to the polymeric film between pairs of electrodes disposed along the longitudinal direction of the polymeric film. In use, voltages are applied across the electrodes of each electrode pair so that an expansion produced in the length of a polymeric film by one electrode pair can be the same as a contraction in the length of the film caused by a second pair of electrodes, and vice versa. A push-pull motion of the optical means can thereby be produced. Direct current or alternating current voltage may be used.

This invention will now be described in more detail referring to the accompanying drawings, in which:

Figure 1 is a perspective view of a first embodiment of light processing apparatus of this invention;

Figure 2 is a schematic front view of a second embodiment of light processing apparatus of this invention;

Figure 3 is a schematic front view of a third embodiment of light processing apparatus of this invention;

Figure 4 is a schematic front view of a fourth embodiment of light processing apparatus of this invention; and

Figure 5 is a perspective view of a fifth embodiment of light processing apparatus of this invention.

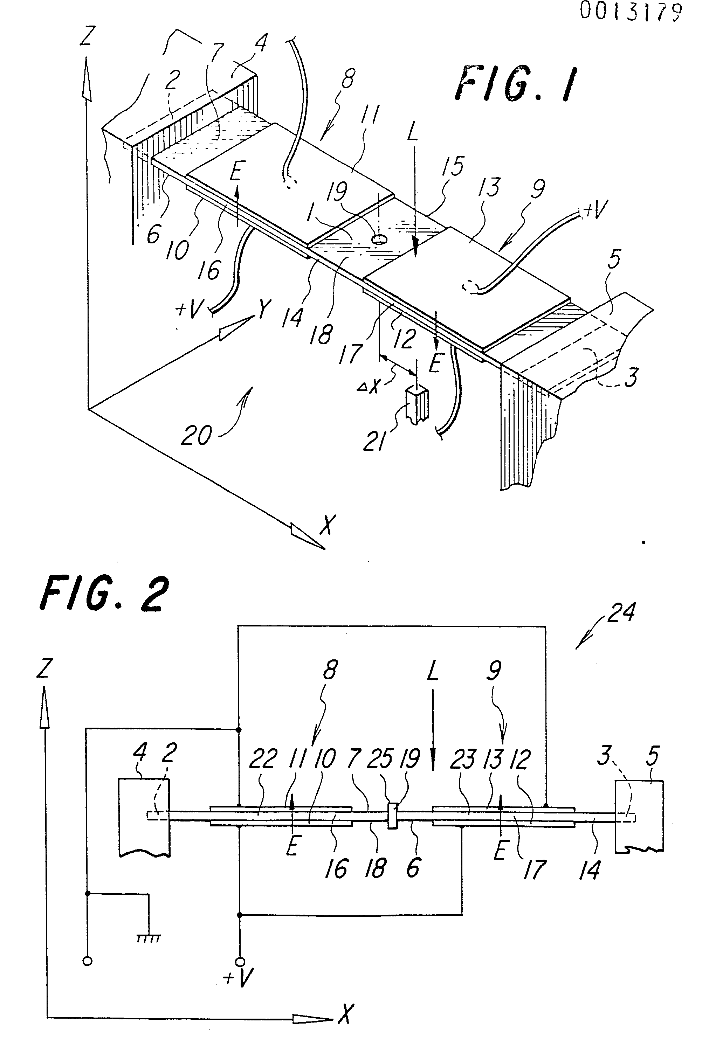

In Figure 1, a rectangular piezoelectric high polymeric film 1 is held under tension at its two longitudinally opposed ends 2 and 3 by fixing members 4 and 5 respectively. To facilitate the understanding of the description which follows, a conventional three-dimensional Cartesian coordinate system has been included in Figure 1. The x-axis corresponds to the longitudinal direction of the film 1 in the direction from the fixing member 4 to the fixing member 5, the y-axis lies parallel to the plane of the film 1 perpendicular to the longitudinal direction of the film, and the z-axis is set perpendicular to the surfaces 6 and 7 of the film 1 and in the upward sense in Figure 1.

Two pairs of electrodes 8 and 9 are provided on the high polymeric film 1. Application of voltage thereto will cause the film to move by reason of piezoelectric effects, this in turn moving an optical means in the form of a pin hole 19 in the film. The electrode pair 8 consists of conductive films 10 and 11 disposed on the surfaces 6 and 7 respectively. The electrode pair 9 consists of conductive films 12 and 13 provided on the surfaces 6 and 7 respectively. Each of the electrodes 10, 11, 12 and 13 extends fully across the width of the film 1 from one side 14 to the other side 15. Sides 14 and 15 are not held by any fixing members or the like.

When a voltage V is applied to the electrode pair 8 such that the electrode 10 is at a higher potential than the electrode 11, an electric field E is generated in the positive direction of the z-axis in the portion 16 of the high polymeric film 1 which is located between the electrodes 10 and 11. A voltage V applied to the electrode pair 9 such that the electrode 13 is at a higher potential than the electrode 12, causes an electric field E to be generated in the negative direction of the z-axis in portion 17 of the high polymeric film 1 which is located between the electrodes 12 and 13.

- 4 -

The high polymeric film 1 may be a piezoelectric high polymeric film obtained by polarizing a film of polyvinylidene fluoride resin, polyvinyl fluoride resin, polyacrylonitrile resin, or the like. Some high polymeric films must be stretched to be used in the apparatus of this invention, whilst others may be unstretched. It depends on the structure of each particular film whether it should be stretched or not. For example, a film consisting of polyvinylidene fluoride homopolymer which usually has a $\alpha$-structure before stretching should have been stretched prior to being used as the film 1. However, certain polyvinylidene fluoride copolymers which have a $\beta$-structure before stretching need not be stretched. The high polymeric film 1 may be a composite piezoelectric film obtained by polarizing a film in which inorganic piezoelectric bodies such as PZT (plumbic zirconate titanate) are dispersed.

The high polymeric film 1 is preferably a composite piezoelectric film or more especially a piezoelectric film obtained by polarizing a film of a polyvinylidene fluoride resin. In the present description and claims the term "polyvinylidene fluoride resin" means polyvinylidene fluoride homopolymer, a copolymer consisting mainly of vinylidene fluoride, or a polymer composition consisting mainly of the homopolymer and/or the copolymer.

The piezoelectric polymeric film is so formed that, when an electric field is applied in the positive or negative direction along the z-axis, the portion 16 or 17 of the film 1 is expanded or contracted along the x-axis. In order that a large expansion or contraction can be achieved, the film 1 preferably has a large piezoelectric constant $d_{31}$. The thickness of the film 1 may range from $1 \times 10^{-6}$ m (1 $\mu$m) to several $10^{-3}$ m (mm),

preferably from $1 \times 10^{-6}$m ($1$ μm) to $10^{-4}$m ($100$ μm). When the film 1 is thicker than about $10^{-4}$m ($100$ μm), it will bend under its own weight. Accurate movement of optical means cannot be obtained or the characteristic vibrational frequency of the film 1 will be reduced in such a situation when it desired to extend the film 1 by a relatively small tension.

The film 1 is so arranged that, when an electric field E is applied to the portion 16 of the film 1 in the positive direction of the z-axis by the electrode pair 8, the corresponding piezoelectric effect causes the portion 16 to be expanded in the direction of the x-axis and that, when electric field is applied to the portion 17 of the film 1 in the negative direction of the z-axis by the electrode pair 9, the corresponding piezoelectric effect causes the portion 17 to be contracted in the direction of the x-axis. The voltages applied to the electrode pairs 8 and 9 may be reversed. In that case, the portion 16 will contract and the portion 17 will expand.

It is preferable that the portions 16 and 17 have the same magnitude of polarization, that the electrode pairs 8 and 9 are the same size and dimension, and that in use the same magnitude of voltage V is applied to each of the electrode pairs 8 and 9 in order that the expansion of one of the portions 16 and 17 matches the contraction of the other portion so that a cooperative push-pull effect occurs. It is desired that the expansion is of the same magnitude as the contraction. The expansion and contraction can be matched by adjusting the magnitude of the applied voltage, even though the magnitudes of the polarization of the portions 16 and 17 are different from each other when no external electric field is applied.

The portion 18 of the film 1 which is located between the electrode pairs 8 and 9 is provided with a pin hole 19 which serves as an optical means. In Figure 1, the pin hole 19 is shown as being relatively large only so that it can be easily distinguished. The optical means 19 may alternatively be a fish eye, polarizer, slit, lens, prism, diffraction element, plane mirror, curved mirror, half mirror, or optical fiber, or a phototransducer which converts optical signals into other physical quantities, for example an element which converts light into electricity such as a pyroelectric element or a photoelectric element which converts optical signals into electric signals. A plurality of optical means may be provided at different locations in the portion 18. A combination of more than two optical elements or phototransducers may be employed.

A hole or the like in the film 1 can readily serve as a pin hole or a fish eye. When a pyroelectric element is used as the optical means 19, a polyvinylidene fluoride resin film 1 can be used as the optical means 19 by fitting the film with electrodes and polarizing the film. When a lens, mirror, prism, diffraction grating, optical fiber, photoelectric element or the like is used as the optical means 19, the optical means 19 can be fixed on the film 1 by any suitable method, for example by use of an adhesive and in this case, the film 1 serves as a support for the optical means, 19.

In a light processing apparatus 20 arranged as described above, a highly directional narrow light beam L can irradiate the surface 7 of the film 1. A light-receiving means 21 is placed on the opposite side of the film 1 from the source of light, facing the film. The y-coordinate of the light-receiving means 21 is the same as that of the pin hole 19 used as an optical means. The x-coordinate of the light-receiving means 21 differs from that of the pin hole 19 by an amount $\Delta x$. Part of the light beam L would be received by the light-receiving means 21 if the film 1 were not present. When no voltage is applied to the electrode pairs 8 and 9, the film 1 prevents the light beam L from being received.

When a voltage V is applied to the electrode pairs 8 and 9, the portions 16 and 17 of the film 1 are placed under electric fields E in the positive and negative senses of the z-axis, respectively. The portion 16 expands along the x-axis and the portion 17 contracts along the x-axis so that the pin hole 19 is displaced in the positive direction of the x-axis. When the voltage V applied to the electrode pairs 8 and 9 is increased gradually, the displacement of the pin hole 19 along the x-axis also increases. When the voltage reaches a predetermined voltage Vo, the displacement is $\Delta x$. The light beam L then passes through the pin hole 19 and is received by the light-receiving means 21. The same result is obtained when the voltage V is rapidly increased from 0 to Vo. When the voltage applied to the electrode pairs 8 and 9 is reversed, the pin hole 19 will be displaced in the negative direction of the x-axis. Thus if another light-receiving means is provided at a position 2 ($\Delta x$) in the negative direction of the x-axis from the light-recieving means 21, the light signal L, corresponding to a desired AC voltage signal, can be converted into at least two pieces of desired information during one period.

The embodiment of light processing apparatus shown in Figure 1 can also operate as a photoswitch. Even when a lens, polarizer, optical fiber or the like is used as the optical means 19, the light-processing apparatus 20 can operate as a photoswitch by varying the spatial displacement of the optical means 19. For example, when the polymeric film 1 is a polyvinylidene fluoride homopolymer possessing a piezoelectric constant $d_{31}$ of $2 \times 10^{-16}$ A ($6 \times 10^{-7}$ cgs esu), a thickness of $10^{-5}$m (10 μm), the length (along x-axis) of each electrode pair 8 and 9 is $5 \times 10^{-2}$m (5 cm) and an alternating voltage of 100 V is applied to the electrode pairs 8 and 9, the optical means 19 is displaced by about $2 \times 10^{-5}$m (20 μm) along the x-axis. This magnitude of displacement will be large enough to support on-off operation of light when a light beam is focused sharply on the optical means. It will be appreciated that, when a curved mirror having a radius of curvature slightly larger than $10^{-5}$m (10 μm) is used as the optical means 19, the light processing apparatus 20 can widely change the direction of the reflected narrow light beam with high sensitivity.

Two-dimensional light processing can be also effected by combining two of the light processing apparatuses 20 of Figure 1. For example, a two-dimensional light locus can be obtained against a wide incident light beam L by providing a first light processing apparatus 20 which has a slit as an optical means 19 and arranging below the first light processing apparatus 20 a second light processing apparatus which has, as an optical means, another slit below and perpendicular to the first slit. Another embodiment of light processing apparatus capable of obtaining a two-dimensional light locus will be described later.

Generally, the converse piezoelectric effect is highly reproducible and the position of the optical means 19 on the high polymeric film 1 can be changed in the direction of the x-axis according to the change in the magnitude of the external electric field in the direction of the z-axis. Unlike an inorganic piezoelectric body, the piezoelectric high polymeric film 1 can be formed with a very small thickness so that the light processing apparatus can be operated by a relatively low voltage and the optical means 19 can be displaced relatively large distances by a relatively low voltage. In addition, large displacements of optical means 19 also occur because a uniform and long piezoelectric high polymeric film can be formed.

The ends 2 and 3 of the high polymeric film 1 may not necessarily be fixed, but may be connected to elastic members or the like and may be pulled outwardly along the x-axis (to the left and to the right respectively in Figure 1). However, in order to ensure à large displacement of the optical means 19, the ends 2 and 3 are preferably held by fixing members 4 and 5. Adhesion or mechanical fixing means may be used.

The electrodes 10, 11, 12 and 13 may not necessarily be fixed on the film 1. They may be slidably supported relative to the film 1 with or without a gap between the electrode and the surface 6 or 7 of the film 1. When the electrodes are slidably supported, the portions 17 and 16 of the film 1 can contract and expand more easily than when the electrodes are fixed on the surfaces of the film,1, and the fitting of lead wires to the electrodes is facilitated. However, the inter-electrode spacing for each electrode pair 8 or 9 is preferably small because the degree of expansion and contraction of the film 1 and the displacement of the optical means 19 are larger the stronger the electric field E at the portions 16 and 17. In other words, the electric field E is stronger as the spacing between the electrodes 10 and 11 or the electrodes 12 and 13 is smaller. Vapor deposition techniques or the like enable conductive films of metal (e.g. aluminum) or the like having a sufficiently small thickness relative to the thickness of the film 1 to be formed on the film 1 for use as electrodes, so the electrodes 10, 11, 12 and 13 are preferably fixed on the film 1.

It is not essential for there to be two electrode pairs. One electrode pair, for example the electrode pair 8, may suffice. In that case, at least one of the ends 2 and 3 of the film 1 is preferably connected to an elastic member or the like so that the film 1 is held taut. However, two or more electrode pairs are preferably provided because, when only one electrode pair is present, it is not always possible to control accurately the displacement of the optical means 19.

The film 1 need not be a single sheet. Figure 2 shows a second embodiment of light processing apparatus 24 of this invention, using two piezoelectric films 22 and 23. In Figure 2, the same reference numerals as those employed in Figure 1 have been used where appropriate. A Cartesian coordinate system has also been set in the same way as in Figure 1.

The film 22 is the same as the film 1 in Figure 1 and is fixed at one end 2 by fixing member 4. The film 23 is also the same as the film 1 in Figure 1, but has been inverted and fixed at one end 3 by a fixing member 5. The films 22 and 23 are connected with each other by a transverse connecting member 25. The longitudinal direction of the connecting member 25 (i.e. the direction of the y-axis) is perpendicular to the direction from the member 4 to the member 5 (i.e. the direction of the x-axis). An optical means 19 is fixed on the connecting member 25. Electrode pairs 8 and 9 and films 22 and 23 are symmetical with respect to the optical member 19.

- 11 -

In the light processing device 24 thus arranged, when electrode 10 is kept at a potential higher than that of electrode 11 by a voltage V and electrode 12 is also kept at a potential higher than that of electrode 13 by a voltage V, portion 16 expands in the direction of the x-axis by a length depending on the electric field E in the positive direction of the z-axis while portion 17 contracts in the direction of the x-axis by a length depending on the electric field E, also in the positive direction of the z-axis. As a result, the optical means 19 is displaced in the positive direction of the x-axis. The light processing apparatus 24 can therefore effect light processing such as photoswitching in the same way as the light processing apparatus 20 of Figure 1.

The voltages applied to the electrode pairs 8 and 9 may be different in magnitude, and the films 22 and 23 may possess different piezoelectric constants, sizes and shapes. However, the light processing device 24 is preferably so arranged that the length by which portion 17 contracts is the same as the length by which portion 16 expands, and vice versa. It is possible to provide a light processing apparatus which can process input information from a plurality of incident light beams simultaneously by connecting three or more films each having at least one electrode pair using two or more respective connecting members 25, and fitting each connecting member 25 with an optical means 19.

When the optical means 19 is vibrated along the x-axis at a high frequency using the light processing apparatus 20 or 24, it is desirable that the movable part of the apparatus (the film 1 or films 22 and 23, electrode pairs 8 and 9, optical means 19, and connecting member 25) is light in weight so that the characteristic vibrational frequency of the movable part is high.

- 12 -

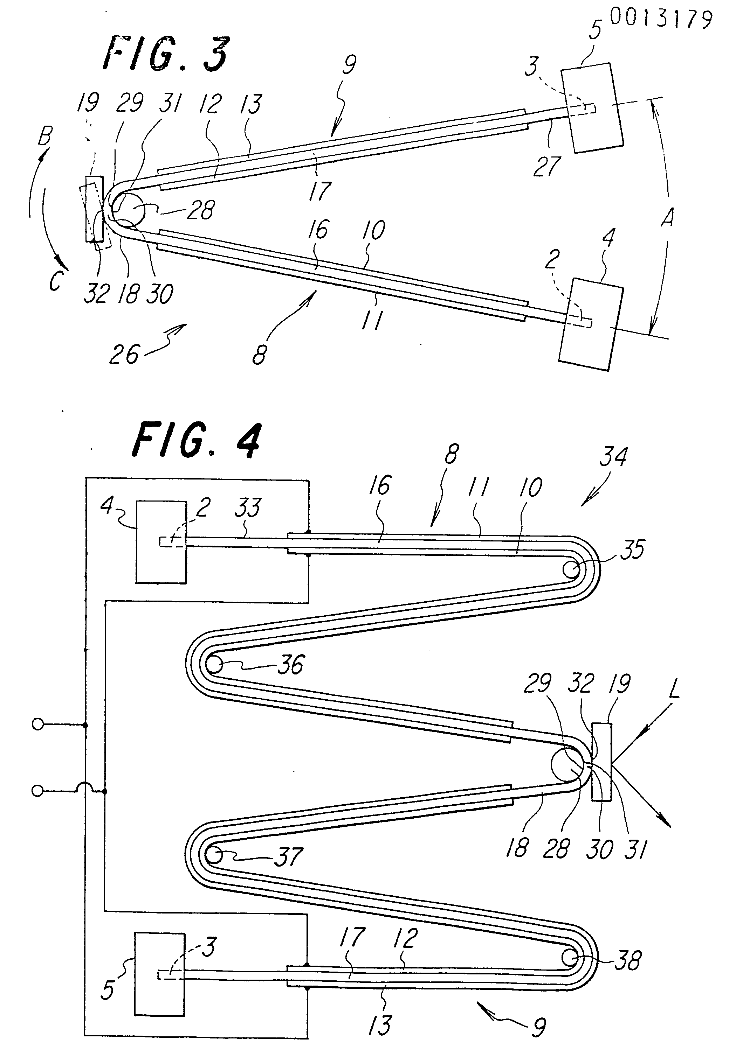

The piezoelectric film or films need not necessarily be supported in a plane. Figure 3 is a front view of a third embodiment of light processing apparatus 26 of this invention, wherein a belt of a piezoelectric film 27 having two electrode pairs 8 and 9 is fixed at its ends 2 and 3 by fixing members 4 and 5 respectively, is bent around and is supported by smooth surface 29 of a supporting rod 28 to enclose an angle A.

In Figure 3, the supporting rod 28 extends perpendicular to the plane of the diagram. The film 27 is in slidable contact with the supporting surface 29 of the rod 28 at the inner surface 31 of a middle portion 30 of the portion 18. On the outer surface 32 of the portion 30 is fixed a mirror 19 or the like as an optical means, for example by adhesion. A prism, diffraction grating, plane mirror, curved mirror, half mirror, or the like can be used as the optical means 19. A film covered with a metal foil can be used as a mirror. The cross section of the supporting rod need not necessarily be circular, but may be for instance hexagonal.

In the light processing apparatus 26 thus arranged, when the portion 16 expands and the portion 17 contracts according to the voltages applied to the electrode pairs 8 and 9, the mirror 19 is pivotted in the direction B around the supporting rod 28. When the portion 16 contracts and the portion 17 expands, the mirror 19 is pivotted in the direction C. Therefore, when a highly directional light beam is projected onto the mirror 19, the direction of the reflected light beam can be freely changed according to the expansion and contraction of the portions 16 and 17. The angle through which the optical means 19 is pivotted and the light beam is moved can be controlled not only by the applied voltage V, the value of the piezoelectric constant and the length of the portions 16 and 17 but also by the size and shape of the supporting rod.

The piezoelectric high polymeric film can be formed as a long belt. Figure 4 shows a fourth embodiment of light processing apparatus 34 of this invention, using a long piezoelectric film 33. Using the light processing apparatus 34, it is possible to broaden the light processing range such as the angle of reflection of the light beam. It is desirable for film 33 to be slidably supported not only by a supporting rod 28 but also by other supporting rods 35, 36, 37 and 38 at intermediate positions. The portions 16 and 17 of the film 33 are polarized in the reverse sense as regards the direction perpendicular to the surfaces of the film. Before setting up the apparatus 34, the portion 16 has been polarized by a voltage keeping the electrode 11 in higher potential than the electrode 10 and the portion 17 has been polarized by a voltage keeping the electrode 12 in higher potential than the electrode 13. Therefore, when electrode 11 is kept at a higher potential than electrode 10 and electrode 13 is kept at a higher potential than electrode 12, for example, the portion 16 expands and the portion 17 contracts.

In the light processing apparatus 34, the optical means 19 can be pivotted so that the reflection direction of an incident light beam L can be changed through a large angle. The apparatus 34 can be relatively compact.

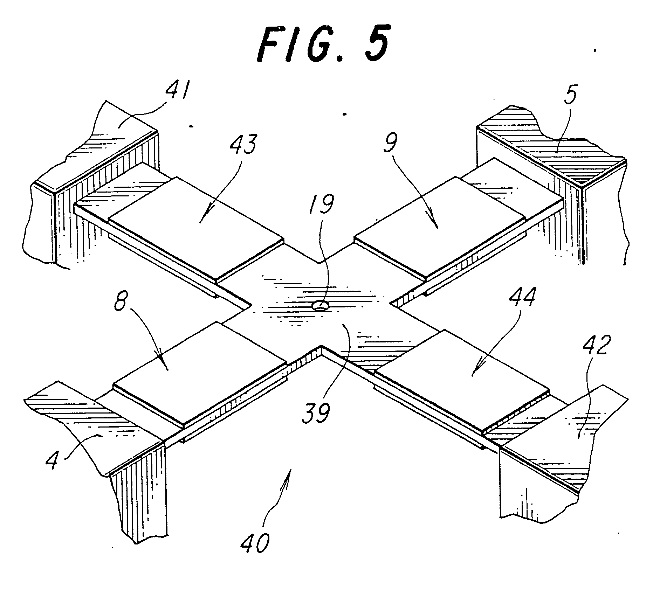

The light processing apparatus 40 of Figure 5 has a cross-shaped piezoelectric film 39. Two fixing members 41 and 42 are provided in addition to the fixing members 4 and 5 to support the film 39 under tension, and two electrode pairs 43 and 44 are provided in addition to the electrode pairs 8 and 9. Similar to the electrode

- 14 -

pairs 8 and 9, the electrode pairs 43 and 44 are so arranged that when one of them causes the film to expand, the other causes the film to contract. An optical means 19 is arranged in the center of the cross-shaped film. Four electric fields are produced by the four pairs of electrodes 8, 9, 43 and 44, and these cause the optical means 19 to be displaced in two dimensions in the plane.

Two-dimensional images can be obtained by using an optical element such as a pin hole and lens as the optical means 19 in the light processing apparatus 40. It can easily be understood that letters or characters can be formed by combining the two-dimensional displacement of optical means 19 with on-off operation of a light source. It is possible to ensure that the position of optical means 19 is always in the path of a narrow light beam projected onto apparatus 40 as shown in Figure 5, even if that alters, by providing another light-electricity convertor element for monitoring changes in the light, and feed back information as an electrical signal to an electric system which controls the voltages applied to the electrode pairs 8, 9, 43 and 44 and displaces the optical means 19 according to the changes in the light path. An optical fiber or the like can be used as the optical means 19.

The film 39 need not necessarily be cross-shaped for the optical means 19 to be displaced in two dimensions provided at least four electrode pairs are provided. The optical means may also be a light source. The piezoelectric films 1, 22, 23, 27, 33 and 39 may comprise a plurality of superposed piezoelectric films with electrode pairs.

EXAMPLE

Referring to Figure 4, a piezoelectric film 33 wherein $d_{31} = 2 \times 10^{-16}$A ($6 \times 10^{-7}$ cgs esu) consisting of a uniaxially stretched polyvinylidene fluoride

homopolymer $9 \times 10^{-6}$m (9 µm) thick was cut into a tape $5 \times 10^{-3}$m (0.5 cm) wide and $8 \times 10^{-1}$m (80 cm) long, and was slidably supported by supporting rods 28, 35, 36, 37 and 38 and fixed by fixing members 4 and 5. Electrodes 10, 11, 12 and 13 had been formed on the film 33 by deposition thereon of a metallic film which had been removed from all parts except for the electrodes. On the outside surface 32 of the center portion 30 of the film 33 which faces away from the cylindrical supporting rod 28 of a diameter of $1 \times 10^{-3}$m (1 mm), a mirror 19 consisting of aluminum deposited on $10^{-5}$m (10 µm) thick mica was fixed using an epoxy resin. Positive and negative DC voltages (+90V and -90V respectively) and an AC voltage of 50 Hz (180V in peak-to-peak) were applied to electrodes 8 and 9. The longitudinal displacement of the film 33 was converted by the supporting rod 28 into a rotational displacement so as to change the angle of the mirror 19. The angle of reflection of an incident laser beam L was measured as 10° for the DC voltage and 4° for the AC voltage. Even for an AC voltage of 1000 Hz, a 3° change was observed.

- 16 -

CLAIMS

1. Light processing apparatus (20) comprising a piezoelectric high polymeric film (1) supported under tension at least at two opposite ends (2,3) thereof, at least one pair (8 or 9) of electrodes arranged to produce an electric field (E) across the thickness of the polymeric film and optical means (19) connected to the polymeric film such that said optical means can be displaced upon piezoelectric response of the film to a voltage applied across the electrode.

2. Light processing apparatus according to claim 1, wherein each electrode comprises a thin conductive film (10, 11, 12, 13) fixed to a surface of said polymeric film (1).

3. Light processing apparatus according to claim 1 or 2 wherein the polymeric film (1) is provided with two pairs (8,9) of electrodes which are arranged such that the electric field produced by one of said pairs expands a corresponding first part of said polymeric film along an axis between said two ends, and the electric field produced by the other pair contracts a corresponding second part of said polymeric film along said axis.

4. Light processing apparatus according to claim 3, wherein said optical means is provided between adjacent pairs of electrodes.

5. Light processing apparatus according to any one of the preceding claims, wherein a plurality of optical means are spaced apart along the surface of said polymeric film.

6. Light processing apparatus according to any one of the preceding claims, including means to support and bend said polymeric film at a position between the two opposite ends of the film where the film is supported.

7.   Light processing apparatus according to claim 6, wherein the surface of said polymeric film opposite to that in contact with said support means is provided with optical means at said intermediate position which can be pivotally displaced depending on the expansion and/or contraction of said film.

8.   Light processing apparatus according to any one of claims 1 to 5 wherein the film is in two parts interconnected on a line transverse to the direction between said ends.

9.   A light processing  apparatus according to any one of claims 1 to 5, wherein said polymeric film is in the form of a cross with said optical means being positioned in the centre of said cross and the end of each arm of the cross being held under tension, a pair of electrodes being provided on each face of each arm of the cross such that the four electric fields produced by said pairs of electrodes can displace said optical means in two-dimensions.

10.   Light processing apparatus according to any one of the preceding claims wherein said polymeric film principally consists of polyvinylidene fluoride.

0013179

FIG. 1

FIG. 2

2/3

0013179

FIG. 3

FIG. 4

# FIG. 5

| Category | Citation of document with indication, where appropriate, of relevant passages | Relevant to claim |
|---|---|---|
| | GB - A - 1 520 811 (PLESSY COMP.)<br>* Page 1, lines 64-94; page 2, lines 1-21 * | 1,2,3, 4,9,10 |
| | -- | |
| | US - A - 3 867 014 (J.C. KEMP)<br>* Abstract; claims; figures 3,4 * | 1,9 |
| | -- | |
| | US - A - 3 758 199 (J.B. THAXTER)<br>* Claim 1; figures 1,3 * | 1,7 |
| | -- | |
| | FR - A - 2 268 572 (U.K.G.B.)<br>* Claims 1,2,8,10,11,12 * | 1,4,9 |
| | -- | |
| | US - A - 3 902 783 (V. BODLAJ)<br>* Claims; figures * | 5,6 |
| | -- | |
| A | FR - A - 2 285 626 (EASTMAN KODAK)<br>* Claims 1,2,3 * | 1 |
| | -- | |
| A | $US - A - 4 025 203 (J.K. LEE)<br>* Abstract; figure 1 * | 1 |
| | ---- | |

**DOCUMENTS CONSIDERED TO BE RELEVANT**

**CLASSIFICATION OF THE APPLICATION (Int. Cl. )**

G 02 F 1/01
G 02 B 7/18

**TECHNICAL FIELDS SEARCHED (Int.Cl )**

G 02 B 7/18
G 02 F 1/01

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 31-03-1980 | PFAHLER |

EPO Form 1503.1  06.78